# FASCICULE DE BREVET EUROPEEN

(11) **EP 4 476 035 B1**
(45) Date de publication et mention de la délivrance du brevet: **24.09.2025**
(21) Numéro de dépôt: 23707139.4
(22) Date de dépôt: 07.02.2023
(51) Int. Cl.: B28B 1/26, B28B 7/34, B28B 23/00, C04B 35/565, C04B 35/80, C04B 35/83

(54) **PROCEDE DE FABRICATION D'UNE PIECE EN MATERIAU COMPOSITE**
VERFAHREN ZUR HERSTELLUNG EINES TEILS AUS EINEM VERBUNDSTOFF
METHOD FOR PRODUCING A PART MADE OF COMPOSITE MATERIAL

(30) Priorité: 10.02.2022 FR 2201173
(43) Date de publication de la demande: 18.12.2024
(73) Titulaire: Safran Nacelles, 76700 Gonfreville-l'Orcher (FR)
(72) Inventeur: DESJOYEAUX, Bertrand Léon Marie, 77550 MOISSY-CRAMAYEL (FR); SILVA DE VASCONCELLOS, Davi, 77550 MOISSY-CRAMAYEL (FR)
(74) Mandataire: Cabinet Beau de Loménie
(86) Numéro de dépôt international: PCT/FR2023/050158
(87) Numéro de publication internationale: WO 2023/152441

(56) Documents cités:
- DE-A1- 102020 106 043
- FR-A1- 3 071 246

## Description

### Domaine Technique

L'invention concerne un procédé de fabrication d'une pièce en matériau composite dans lequel le matériau destiné à former la matrice est apporté par introduction d'une suspension dans une texture de renfort et dont le milieu liquide de cette suspension est évacué de la texture par drainage au travers d'une couche granulaire destinée à être incorporée dans la pièce obtenue. L'invention concerne notamment des applications à la fabrication de pièces de turbomachine, par exemple de pièces de turbomachine aéronautique.

### Technique antérieure

Il est connu de fabriquer des pièces en matériau composite en réalisant une introduction d'une poudre dans la porosité d'une texture fibreuse par infiltration d'une suspension, par exemple à l'aide d'un procédé STM (« Slurry Transfer Molding »). Dans ce cas, le milieu liquide de la suspension est drainé ou filtré alors que la poudre destinée à former la matrice de la pièce est retenue dans la porosité de la texture. Un tel procédé est notamment décrit dans le document WO 2016/102839 lequel propose la mise en œuvre d'une pièce rigide en matériau poreux en polytétrafluoroéthylène (PTFE) interposé entre la texture fibreuse et la surface de moulage au travers de laquelle le milieu liquide de la suspension est évacué. La pièce en matériau poreux est ensuite détachée de la texture fibreuse lors de son démoulage après l'infiltration. Néanmoins, la rigidité de la pièce en matériau poreux mise en œuvre lui confère une capacité d'adaptation limitée pour des géométries complexes et cette technique présente un coût de mise en œuvre relativement élevé.

L'invention propose de remédier aux inconvénients de l'art antérieur.

Le document DE 10 2020 106043 A1 divulgue un procédé de fabrication d'une pièce en matériau composite, comprenant au moins:
- l'obtention d'un moule comprenant (i) une texture fibreuse, (ii) une couche granulaire de filtration située entre une surface de drainage de la texture et une surface perméable d'évacuation,et (iii) un élément de rétention de la couche granulaire distinct de celle-ci et situé entre la surface perméable d'évacuation et la surface de drainage,
- l'introduction d'une suspension comprenant des particules matricielles dans un milieu liquide au travers d'une surface d'introduction de la texture fibreuse distincte de la surface de drainage, le milieu liquide traversant la surface de drainage, la couche granulaire de filtration et l'élément de rétention pour être évacué au travers de la surface perméable d'évacuation, et les particules matricielles étant retenues dans la porosité de la texture fibreuse par la couche granulaire de filtration, et
- la formation de la pièce en matériau composite par formation d'une matrice dans la porosité de la texture fibreuse à partir des particules matricielles.

### Exposé de l'invention

L'invention concerne un procédé de fabrication d'une pièce en matériau composite, comprenant au moins :
- l'obtention d'un moule comprenant (i) une texture fibreuse, (ii) une couche granulaire de filtration située entre une surface de drainage de la texture et une surface perméable d'évacuation et comprenant une poudre de particules de filtration, et (iii) un élément de rétention de la couche granulaire distinct de celle-ci et situé entre la surface perméable d'évacuation et la surface de drainage,
- l'introduction d'une suspension comprenant des particules matricielles dans un milieu liquide au travers d'une surface d'introduction de la texture fibreuse distincte de la surface de drainage, le milieu liquide traversant la surface de drainage, la couche granulaire de filtration et l'élément de rétention pour être évacué au travers de la surface perméable d'évacuation, et les particules matricielles étant retenues dans la porosité de la texture fibreuse par la couche granulaire de filtration, et
- la formation de la pièce en matériau composite par formation d'une matrice dans la porosité de la texture fibreuse à partir des particules matricielles et formation d'une couche de surface de cette pièce à partir des particules de filtration.

L'invention propose l'emploi d'une couche granulaire de filtration qui est destinée à être intégrée à la pièce en matériau composite obtenue, ce qui permet de s'affranchir de l'étape de retrait de la pièce poreuse rencontrée dans l'art antérieur et des limitations en termes de géométries accessibles liées à la rigidité de cette pièce poreuse. L'élément de rétention permet d'éviter que les particules de filtration ne soient emportées à l'extérieur du moule lors de l'évacuation du milieu liquide.

Dans un exemple de réalisation, la couche granulaire de filtration comprend en outre des fibres de renfort distinctes des particules de filtration.

Une telle caractéristique permet avantageusement d'améliorer les propriétés mécaniques de la couche de surface de la pièce obtenue.

Dans un exemple de réalisation l'élément de rétention comprend au moins un film ou un textile présentant une pluralité d'orifices d'évacuation du milieu liquide et situé entre la couche granulaire de filtration et la surface perméable d'évacuation.

Dans un exemple de réalisation, l'élément de rétention comprend au moins un ensemble granulaire formé par des particules de filtration additionnelles ayant une taille moyenne différente et/ou une forme différente des particules de filtration et imbriquées avec celles-ci de sorte à empêcher leur mouvement vers la surface perméable d'évacuation.

Sauf mention contraire, par « taille moyenne », on désigne la dimension donnée par la distribution granulométrique statistique à la moitié de la population, dite D50.

En particulier, les particules de filtration additionnelles peuvent avoir une taille moyenne inférieure ou égale à trois fois la taille moyenne des particules de filtration, par exemple inférieure ou égale à la taille moyenne des particules de filtration.

La couche granulaire de filtration peut être positionnée dans le moule de différentes manières.

Selon un premier exemple, l'obtention du moule comprend le positionnement de la couche granulaire de filtration sous la forme d'un bloc comprenant les particules de filtration liées entre elles par un liant fugitif.

Selon un autre exemple, l'obtention du moule comprend la pulvérisation des particules de filtration sur la surface de drainage de la texture fibreuse et/ou sur la surface perméable d'évacuation.

Selon un exemple, l'obtention du moule comprend (a) la formation de la couche granulaire de filtration comprenant les particules de filtration, et (b) l'apport des particules de filtration additionnelles dans un liquide vecteur lequel est drainé au travers des particules de filtration et de la surface de drainage, les particules de filtration additionnelles étant retenues par les particules de filtration de manière à former l'élément de rétention.

En particulier, la couche granulaire de filtration peut être formée par apport des particules de filtration dans un deuxième liquide vecteur du côté de la surface de drainage, lesdites particules de filtration pouvant présenter une granulométrie supérieure à une taille des interstices du réseau poral de la texture fibreuse, avec drainage du deuxième liquide vecteur au travers de la surface de drainage, les particules de filtration pouvant être retenues par la texture fibreuse de manière à former la couche granulaire de filtration.

Dans un exemple de réalisation, la matrice est formée par frittage des particules matricielles, et la couche de surface est formée par frittage des particules de filtration.

L'emploi d'un frittage permet avantageusement de former la matrice et la couche de surface avec un coût de mise en œuvre limité.

Dans un exemple de réalisation, les particules matricielles et les particules de filtration sont formées d'un même matériau.

Une telle caractéristique permet avantageusement d'obtenir une compatibilité optimale entre la couche de surface et la matrice de la pièce.

Dans un exemple de réalisation, les particules matricielles et les particules de filtration sont en matériau céramique oxyde, en carbure de silicium ou en carbone. Dans un exemple de réalisation, la pièce est une pièce de turbomachine, par exemple une pièce de turbomachine aéronautique.

### Brève description des dessins

[Fig. 1] La figure 1 est une vue schématique en coupe montrant l'introduction de particules matricielles dans la porosité d'une texture dans le cadre d'un exemple de procédé selon l'invention.
[Fig. 2] La figure 2 illustre schématiquement l'obtention de la pièce par traitement thermique à partir de la texture obtenue selon l'exemple de la figure 1.
[Fig. 3] La figure 3 est une vue schématique en coupe montrant l'introduction de particules matricielles dans la porosité d'une texture dans le cadre d'une variante de procédé selon l'invention.
[Fig. 4] La figure 4 représente, de manière schématique et partielle, une couche granulaire de filtration utilisable dans le cadre de l'invention.
[Fig. 5] La figure 5 représente, de manière schématique et partielle, une autre couche granulaire de filtration utilisable dans le cadre de l'invention.
[Fig. 6A] La figure 6A représente, de manière schématique et partielle, un exemple de couche granulaire de filtration utilisable dans le cadre de l'invention.
[Fig. 6B] La figure 6B représente, de manière schématique et partielle, un exemple d'élément de rétention sous la forme d'un ensemble granulaire utilisable dans le cadre de l'invention et associé à la couche granulaire de la figure 6A.

### Description des modes de réalisation

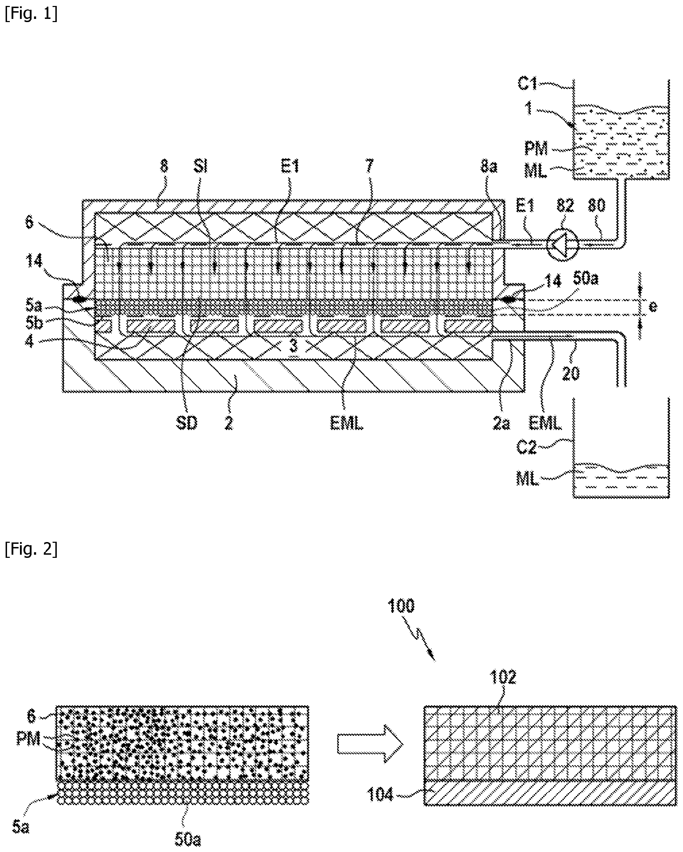

La figure 1 représente un moule formé par la réunion d'un outillage supérieur 8 et d'un outillage inférieur 2 qui comprend une surface 4 de moulage, par exemple formée d'un matériau rigide, qui est destinée à donner sa forme à la surface de la pièce à obtenir située en vis-à-vis. La surface 4 de moulage forme, dans l'exemple de la figure 1, une surface perméable permettant l'évacuation du milieu liquide ML de la suspension 1 à l'extérieur du moule. Une texture fibreuse 6 est présente dans le moule et présente le long d'une de ses surfaces SD, dite surface de drainage, une couche granulaire 5a de filtration comprenant une pluralité de particules 50a de filtration. Les particules 50a peuvent être au contact de la surface SD. Un élément de rétention, sous la forme d'une couche 5b poreuse de rétention des particules 50a, est situé entre la couche 5a et la surface 4 de moulage et présente une porosité suffisamment fine pour retenir les particules 50a en place contre la texture 6 lors de l'évacuation du milieu liquide ML lors de l'introduction de la suspension 1. Les couches 5a et 5b peuvent, comme illustré, couvrir sensiblement l'intégralité de la surface SD. Les particules 50a peuvent être en contact avec la couche 5b. La couche 5b peut être en contact avec la surface 4 de moulage.

Les particules 50a sont formées d'un matériau compatible d'une intégration dans la pièce en matériau composite. A titre d'exemple, ces particules 50a peuvent être en alumine (Al₂O₃) si la pièce est un composite oxyde/oxyde, en carbure de silicium (SiC) pour une pièce à matrice de carbure de silicium, ou en carbone ou en graphite si une pièce à matrice de carbone est fabriquée. Afin de garantir une compatibilité optimale, on peut utiliser les particules 50a formées du même matériau que les particules matricielles PM mais l'homme du métier reconnaîtra que des variantes sont possibles sans sortir du cadre de l'invention. D'une manière générale, la taille moyenne des particules 50a peut être supérieure à la taille moyenne des particules matricielles PM. La taille moyenne des particules 50a peut être comprise entre 1 fois et 50 fois la taille moyenne des particules matricielles PM, notamment entre 1 fois et 30 fois ou entre 1 fois et 3 fois la taille moyenne des particules matricielles PM. D'une manière générale, la couche 5a peut avoir une épaisseur e comprise entre 5 fois et 1000 fois la taille moyenne des particules matricielles PM, notamment entre 10 fois et 500 fois la taille moyenne des particules matricielles. A titre d'exemple, l'épaisseur e de la couche 5a peut être comprise entre 4 µm et 200 µm.

La texture 6 est destinée à former le renfort de la pièce en matériau composite. La fabrication de la texture 6 fait appel à des techniques connues en soi, comme l'empilement de tissus bidimensionnels, le tissage tridimensionnel ou encore le placement de rubans de fibres unidirectionnelles. Les fils utilisés pour former la texture 6 peuvent être en matériau céramique, par exemple carbure ou oxyde, ou en carbone. En particulier, on peut utiliser des fils d'alumine si une pièce composite oxyde/oxyde est fabriquée.

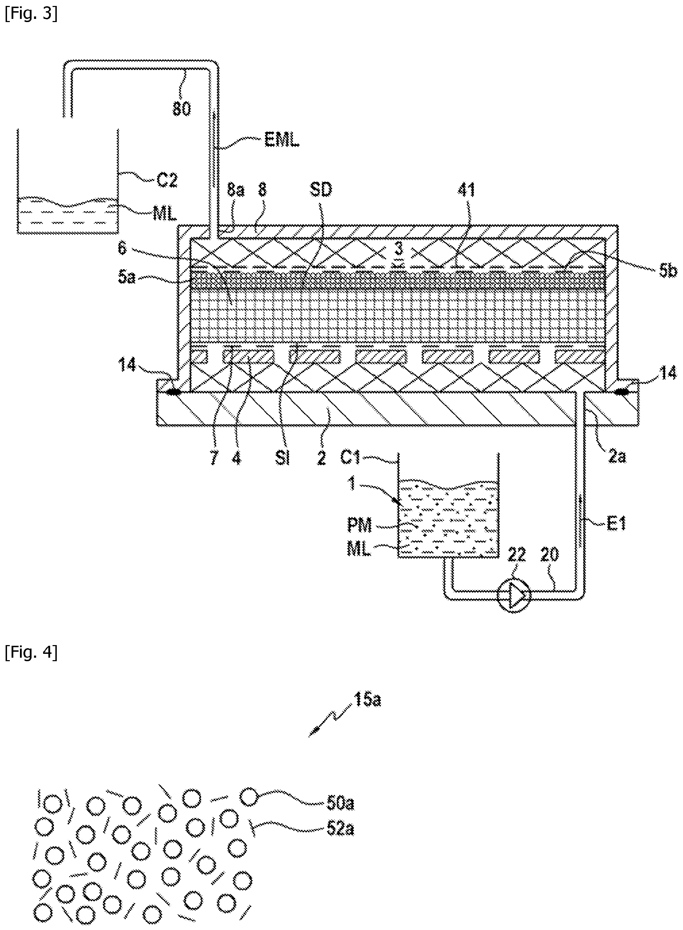

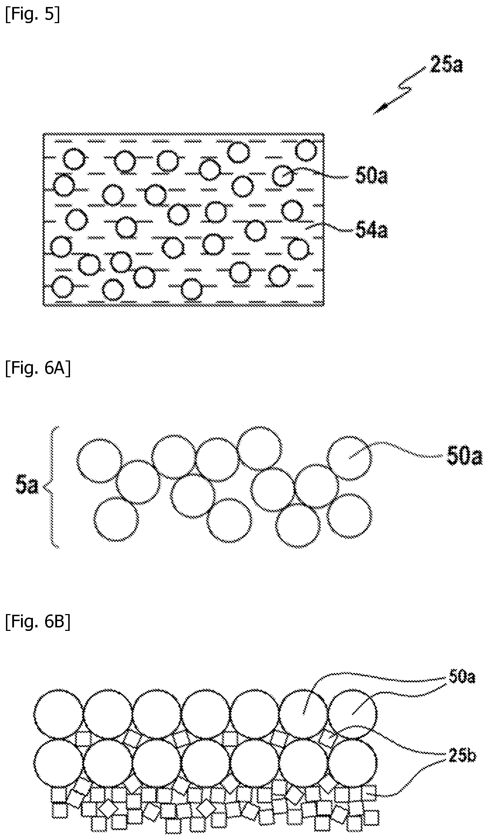

La couche 5b permet de retenir les particules 50a contre la surface de drainage SD de la texture 6. Dans l'exemple illustré à la figure 1, la couche 5b est formée par un film comprenant une pluralité d'orifices traversant ou plusieurs de ces films superposés. La taille des orifices est choisie en fonction de la taille des particules 50a pour assurer leur rétention. A titre illustratif, les orifices peuvent avoir une taille moyenne comprise entre 10 µm et 100 µm et le film peut présenter un taux surfacique d'ouverture (correspondant au rapport de la surface totale des orifices / surface du film) compris entre 0,1% et 2%. La couche 5b peut être en matériau polymérique. On peut en variante utiliser une couche 5b formée par un textile, par exemple un tissu. D'une manière générale, la couche 5b peut typiquement avoir une épaisseur inférieure ou égale à 100 µm. Dans le cas de la figure 1, les particules 50a sont non liées entre elles et maintenues en place du fait de leur interposition entre la texture 6 et la couche 5b. La couche 5a peut être sous la forme d'un lit granulaire, ici comprenant une pluralité de grains en vrac formés par les particules 50a. Les particules 50a peuvent avoir une forme sensiblement sphérique ou ellipsoïdale. D'autres structures sont néanmoins possibles pour la couche granulaire de filtration. Selon la variante de la figure 4, la couche 15a de filtration comprend en outre des fibres de renfort 52a, ici sous la forme de fibres discontinues, présentes dans les interstices entre les particules 50a. La fraction volumique des fibres 52a dans la couche 15a peut être sensiblement égale au taux volumique de fibres souhaité dans la texture 6 densifiée par la matrice. Les fibres 52a discontinues peuvent être des fibres courtes ayant notamment une taille moyenne inférieure ou égale à 30 000 µm ou être en variante sous la forme de filaments indépendants. Selon une variante, les fibres de renfort peuvent être liées entre elles de sorte à former un textile comme un tissu ou un non-tissé. Les fibres ajoutées à la couche de filtration sont bien entendu formées d'un matériau compatible d'une intégration de la pièce en matériau composite. Dans un cas particulier, les fibres 52a peuvent être formées d'un même matériau que les particules 50a, et éventuellement que les particules matricielles PM. Selon la variante de la figure 5, la couche 25a de filtration est sous la forme d'un bloc comprenant les particules 50a liées entre elles par un liant 54a fugitif, lequel est destiné à être éliminé durant le procédé. L'élimination du liant 54a permet de libérer la porosité entre les particules 50a et d'évacuer ainsi le milieu liquide ML de la suspension. On peut par exemple choisir un liant 54a soluble dans le milieu liquide ML ou en variante un liant 54a éliminable thermiquement. On peut bien entendu adjoindre au liant 54a et aux particules 50a des fibres 52a comme dans le cas de la figure 4. Lors de la mise en place des éléments dans le moule, la couche 5a peut être déposée puis la texture 6 peut être positionnée et le moule refermé. Ce dépôt peut être fait par placement manuel ou, en variante, par pulvérisation des particules 50a sur la couche 5b et/ou sur la surface SD.

Le cas des figures 6A et 6B concerne une variante où l'élément de rétention comprend des particules de filtration 25b additionnelles distinctes des particules 50a formant la couche 5a. Dans ce cas, on peut ou non adjoindre la couche 5b de porosité ajustée pour permettre la rétention des particules qui a été évoquée plus haut. La figure 6A montre la couche granulaire de filtration formée par les particules 50a qui peut être réalisée par dépôt comme décrit plus haut. On peut en variante procéder d'abord au positionnement de la texture 6 dans le moule puis réaliser une infiltration des particules 50a par le biais d'un liquide vecteur apporté du côté de la surface SD. Dans l'exemple de la figure 1, cette infiltration peut être réalisée par la partie inférieure du moule au travers de la surface 4 de moulage. Les particules 50a sont choisies avec une granulométrie supérieure à une taille des interstices du réseau poral de la texture 6 pour ne pas traverser celle-ci et être retenues en regard de la surface SD. On a représenté des particules 50a de forme sensiblement sphérique mais on ne sort pas du cadre de l'invention lorsque ces particules 50a ont une forme différente, par exemple lorsqu'elles sont de forme sensiblement polyédrique de façon à s'imbriquer les unes avec les autres, et rendre difficile leur mouvement une fois entassées ou compactées et « percolées ». On peut ensuite procéder à l'apport des particules 25b également par infiltration par un liquide vecteur qui peut être identique ou différent du liquide vecteur utilisé pour apporter les particules 50a. Le mouvement des particules 25b vers la texture 6 est entravé par les particules 50a et certaines des particules 25b se logent dans les interstices existant entre les particules 50a. Dans l'exemple illustré, les particules 25b ont une granulométrie plus fine que les particules 50a, préférentiellement entre 2 et 20 fois inférieure afin de s'imbriquer dans les interstices des particules 50a. Préférentiellement une partie au moins des particules 25b a une forme polyédrique de façon à s'imbriquer les unes avec les autres et se coincer entre les particules 50a. Dans l'exemple illustré, les particules 25b ont une forme différente de celle des particules 50a mais on ne sort pas du cadre de l'invention lorsque ce n'est pas le cas. Ainsi on obtient un ensemble de particules 50a et 25b imbriquées les unes avec les autres, aboutissant à un blocage de l'ensemble. Cette imbrication empêche le mouvement des particules 50a vers la surface 4 de moulage lors de l'évacuation du milieu liquide ML. Selon un exemple, pour une texture 6 dont les filaments ont un diamètre compris entre 10 µm et 20 µm et des espaces interfilamentaires compris entre 1 µm et 5 µm, et des espaces interfibres pouvant atteindre 50µm, on peut utiliser des particules 50a de granulométrie comprise entre 5 µm et 50µm et des particules 25b de granulométrie comprise entre 0,2 µm et 5 µm. On a décrit un cas où l'apport des particules 25b est effectué par infiltration mais on ne sort pas du cadre de l'invention si les particules 50a et 25b sont co-déposées par pulvérisation ou déjà liées par un liant fugitif de manière similaire à ce qui a été décrit plus haut. Dans l'exemple de la figure 6B, l'ensemble des particules 50a et 25b est interposé entre la texture 6 et la surface 4 de moulage. On a représenté le cas de deux ensembles de particules 50a et 25b de granulométrie distincte mais on ne sort pas du cadre de l'invention si davantage de granulométries sont utilisées avec une taille moyenne de particules de filtration généralement décroissante lorsque l'on se déplace depuis la texture 6 vers la surface 4 de moulage. A titre d'exemple, on peut utiliser un premier ensemble de particules de filtration, situé dans une première région du côté de la surface SD, ayant une première taille moyenne comprise entre 0,5 fois et 3,5 fois le diamètre des filaments de la texture 6, préférentiellement entre 0,5 fois et 1,5 fois ce diamètre, un second ensemble de particules de filtration, situé au moins en partie dans une deuxième région entre la première région et la surface 4 de moulage, ayant une deuxième taille moyenne comprise entre 0,1 fois et 1 fois le diamètre des filaments de la texture 6, et un troisième ensemble de particules de filtration, situé au moins en partie dans une troisième région entre la deuxième région et la surface 4 de moulage, ayant une troisième taille moyenne comprise entre 0,03 fois et 0,8 fois le diamètre des filaments de la texture 6. Dans cet exemple, les premier, deuxième et troisième ensembles de particules de filtration sont imbriqués les uns avec les autres et la troisième taille moyenne est inférieure à la deuxième taille moyenne elle-même inférieure à la première taille moyenne.

Une fois l'ensemble des éléments positionnés dans le moule, les particules matricielles PM sont introduites dans la porosité de la texture 6, comme illustré à la figure 1. Ces particules PM sont introduites dans la texture 6 par mise en œuvre de techniques connues en soi. La suspension 1 comprenant les particules matricielles PM dans un milieu liquide ML est initialement stockée dans un contenant C1 situé à l'extérieur du moule. Le milieu liquide ML peut être aqueux ou alcoolique. La taille moyenne des particules matricielles PM peut être comprise entre 0,1 µm et 2 µm. Les particules PM peuvent être en céramique, ou en carbone ou précurseur de carbone. La teneur volumique en particules PM dans la suspension 1 peut, avant l'introduction dans la texture 6, être comprise entre 5% et 50%. Le contenant C1 est relié au moule par l'intermédiaire d'un conduit 80 qui débouche au niveau d'un port 8a situé en amont de la texture 6. Dans le texte, les expressions « en amont » et « en aval » s'entendent, sauf mention contraire, par rapport au sens d'écoulement du milieu liquide ML de la suspension 1. Une pompe 82 est présente sur le conduit 80 et permet l'écoulement de la suspension 1 depuis le contenant C1 vers le port 8a afin de permettre son introduction dans le moule. Alternativement à une pompe 82, il est possible d'utiliser un dispositif de mise en pression de la suspension 1 dans C1 vis-à-vis de l'outillage pour produire l'écoulement de la suspension 1. L'écoulement de la suspension 1 en amont de la texture 6 est matérialisé par les flèches E1 à la figure 1. Un répartiteur 7, par exemple sous la forme d'une grille, permet de répartir uniformément la suspension 1 sur une surface SI d'introduction de la texture 6 opposée à la surface SD. L'emploi d'un tel répartiteur 7 est optionnel. La suspension 1 s'écoule dans la texture 6 au travers de la surface SI et la couche 5a retient les particules matricielles PM dans la porosité de la texture 6 et le milieu liquide ML est drainé au travers de la surface SD, des couches 5a et 5b ainsi que de la surface 4 de moulage perméable pour être évacué à l'extérieur du moule. La texture 6 est présente entre le port 8a et le port 2a le long du trajet d'écoulement du milieu liquide ML. La couche 5a est présente entre la texture 6 et le port 2a le long du trajet d'écoulement du milieu liquide ML. La couche 5b est présente entre la couche 5a et le port 2a le long du trajet d'écoulement du milieu liquide ML. Le milieu liquide ML s'écoule ensuite au travers de la cavité 3 définie par la surface 4 de moulage vers le port 2a situé en aval de la texture et relié par l'intermédiaire d'un conduit 20 à un contenant C2, distinct du contenant C1, et situé à l'extérieur du moule (flèches d'écoulement EML). Le milieu liquide ML est récupéré dans le contenant C2. On obtient ainsi une texture 6 chargée de particules matricielles PM. La texture 6 peut être maintenue en compression dans le moule lors de l'introduction des particules matricielles PM. Une telle compression peut favoriser le drainage du milieu liquide ML et permet d'atteindre une épaisseur cible pour la préforme fibreuse.

Le procédé est poursuivi par la formation de la matrice à partir d'un traitement thermique de cette texture 6 chargée des particules PM et des particules de filtration 50a. Selon l'exemple de la figure 2, on réalise un frittage des particules matricielles PM et des particules 50a afin d'obtenir la pièce 100 en matériau composite. Cette pièce 100 comprend un substrat 102 dont le renfort est formé par la texture 6 et densifié par la matrice obtenue à partir des particules matricielles PM et une couche de surface 104 formée à partir des particules 50a, ici obtenue par frittage de ces particules 50a. On procède alors au démoulage de la pièce 100 comprenant le substrat 102 et cette couche de surface 104 et ensuite au montage de celle-ci, par exemple dans une turbomachine aéronautique. A titre d'exemple de pièces 100, on peut citer une pièce d'éjection de moteur aéronautique, comme une tuyère (« exhaust nozzle ») ou un cône d'éjection (« exhaust plug »), ou un carénage aérodynamique arrière (« APF » dans la littérature anglosaxonne pour « Aft Pylon Fairing »). On reconnaîtra que d'autres méthodes sont envisageables pour la fabrication de la matrice et de la couche de surface. Selon une variante, on peut utiliser des particules matricielles PM et des particules 50a en carbone ou en carbure de silicium et procéder à une infiltration par du silicium fondu afin d'obtenir une matrice céramique et une couche de surface SiC ou Si-SiC.

On vient de décrire, en lien avec la figure 1, une introduction de la suspension 1 par la partie supérieure de la texture 6. L'exemple de la figure 3 est une variante montrant la possibilité d'introduire la suspension 1 par la partie inférieure de la texture 6 et de réaliser le drainage et l'évacuation du milieu liquide par sa partie supérieure. Les références des éléments ayant la même fonction que dans la figure 1 sont reprises dans cette figure. Dans le cas de la figure 3, on peut positionner d'abord la texture 6 sur la surface 4 de moulage puis positionner la couche 5a granulaire de filtration puis la couche 5b de rétention et ensuite refermer le moule. L'évacuation du milieu liquide ML se fait ici au travers d'une surface perméable 41 dans la partie supérieure du moule et en communication avec le port 8a.

L'expression « compris(e) entre ... et ... » doit se comprendre comme incluant les bornes.

## Revendications

1. Procédé de fabrication d'une pièce (100) en matériau composite, comprenant au moins :
- l'obtention d'un moule comprenant (i) une texture fibreuse (6), (ii) une couche granulaire (5a ; 15a ; 25a) de filtration située entre une surface (SD) de drainage de la texture et une surface (4 ; 41) perméable d'évacuation et comprenant une poudre de particules (50a) de filtration, et (iii) un élément de rétention (5b) de la couche granulaire distinct de celle-ci et situé entre la surface perméable d'évacuation et la surface de drainage,
- l'introduction d'une suspension (1) comprenant des particules matricielles (PM) dans un milieu liquide (ML) au travers d'une surface d'introduction (SI) de la texture fibreuse distincte de la surface de drainage, le milieu liquide traversant la surface de drainage, la couche granulaire de filtration et l'élément de rétention pour être évacué au travers de la surface perméable d'évacuation, et les particules matricielles étant retenues dans la porosité de la texture fibreuse par la couche granulaire de filtration, et
- la formation de la pièce en matériau composite par formation d'une matrice dans la porosité de la texture fibreuse à partir des particules matricielles et formation d'une couche de surface (104) de cette pièce à partir des particules de filtration.

2. Procédé selon la revendication 1, dans lequel la couche granulaire (15a) de filtration comprend en outre des fibres (52a) de renfort distinctes des particules (50a) de filtration.

3. Procédé selon la revendication 1 ou 2, dans lequel l'élément (5b) de rétention comprend au moins un film ou un textile présentant une pluralité d'orifices d'évacuation du milieu liquide (ML) et situé entre la couche granulaire (5a ; 15a ; 25a) de filtration et la surface (4 ; 41) perméable d'évacuation.

4. Procédé selon l'une quelconque des revendications 1 à 3, dans lequel l'élément de rétention comprend au moins un ensemble granulaire formé par des particules (25b) de filtration additionnelles ayant une taille moyenne différente et/ou une forme différente des particules (50a) de filtration et imbriquées avec celles-ci de sorte à empêcher leur mouvement vers la surface perméable d'évacuation.

5. Procédé selon l'une quelconque des revendications 1 à 4, dans lequel l'obtention du moule comprend le positionnement de la couche granulaire (25a) de filtration sous la forme d'un bloc comprenant les particules (50a) de filtration liées entre elles par un liant fugitif (54a).

6. Procédé selon l'une quelconque des revendications 1 à 4, dans lequel l'obtention du moule comprend la pulvérisation des particules (50a) de filtration sur la surface (SD) de drainage de la texture fibreuse et/ou sur la surface (4) perméable d'évacuation.

7. Procédé selon la revendication 4 ou selon l'une des revendications 5 ou 6 rattachée à la revendication 4, dans lequel l'obtention du moule comprend (a) la formation de la couche (5a) granulaire de filtration comprenant les particules de filtration (50a), et (b) l'apport des particules (25b) de filtration additionnelles dans un liquide vecteur lequel est drainé au travers des particules de filtration et de la surface de drainage, les particules de filtration additionnelles étant retenues par les particules de filtration (50a) de manière à former l'élément de rétention.

8. Procédé selon la revendication 7 rattachée à la revendication 4, dans lequel la couche (5a) granulaire de filtration est formée par apport des particules de filtration (50a) dans un deuxième liquide vecteur du côté de la surface (SD) de drainage, lesdites particules de filtration présentant une granulométrie supérieure à une taille des interstices du réseau poral de la texture fibreuse (6), avec drainage du deuxième liquide vecteur au travers de la surface de drainage, les particules de filtration étant retenues par la texture fibreuse de manière à former la couche (5a) granulaire de filtration.

9. Procédé selon l'une quelconque des revendications 1 à 8, dans lequel la matrice est formée par frittage des particules matricielles (PM), et la couche de surface (104) est formée par frittage des particules (50a) de filtration.

10. Procédé selon l'une quelconque des revendications 1 à 9, dans lequel les particules (PM) matricielles et les particules (50a) de filtration sont formées d'un même matériau.

11. Procédé selon l'une quelconque des revendications 1 à 10, dans lequel les particules (PM) matricielles et les particules (50a) de filtration sont en matériau céramique oxyde, en carbure de silicium ou en carbone.

12. Procédé selon l'une quelconque des revendications 1 à 11, dans lequel la pièce est une pièce de turbomachine.

## Patentansprüche

1. Verfahren zur Herstellung eines Teils (100) aus einem Verbundstoff, umfassend mindestens:
- Erhalten einer Form, die (i) eine faserige Textur (6), (ii) eine körnige Filtrationsschicht (5a; 15a; 25a), die sich zwischen einer Drainageoberfläche (SD) der Textur und einer durchlässigen Ableitungsoberfläche (4; 41) befindet und ein Pulver von Filtrationspartikeln (50a) umfasst, und (iii) ein Rückhalteelement (5b) der körnigen Schicht, das sich von dieser unterscheidet und sich zwischen der durchlässigen Ableitungsoberfläche und der Drainageoberfläche befindet, umfasst,
- Einführen einer Suspension (1), die Matrixpartikel (PM) in einem flüssigen Medium (ML) umfasst, durch eine Einführungsoberfläche (SI) der faserigen Textur, die sich von der Drainageoberfläche unterscheidet, wobei das flüssige Medium durch die Drainageoberfläche, die körnige Filtrationsschicht und das Rückhalteelement hindurchtritt, um durch die durchlässige Ableitungsoberfläche abgeleitet zu werden, und die Matrixpartikel in der Porosität der faserigen Textur durch die körnige Filtrationsschicht zurückgehalten werden, und
- Bilden des Teils aus einem Verbundstoff durch Bilden einer Matrix in der Porosität der faserigen Textur aus Matrixpartikeln und Bilden einer Oberflächenschicht (104) dieses Teils aus Filtrationspartikeln.

2. Verfahren nach Anspruch 1, wobei die körnige Filtrationsschicht (15a) ferner Verstärkungsfasern (52a) umfasst, die sich von Filtrationspartikeln (50a) unterscheiden.

3. Verfahren nach Anspruch 1 oder 2, wobei das Rückhalteelement (5b) mindestens einen Film oder eine Textilie umfasst, der bzw. die mehrere Öffnungen zur Ableitung des flüssigen Mediums (ML) aufweist und sich zwischen der körnigen Filtrationsschicht (5a; 15a; 25a) und der durchlässigen Ableitungsoberfläche (4; 41) befindet.

4. Verfahren nach einem der Ansprüche 1 bis 3, wobei das Rückhalteelement mindestens einen körnigen Verbund umfasst, der aus zusätzlichen Filtrationspartikeln (25b) mit einer anderen durchschnittlichen Größe und/oder einer anderen Form als Filtrationspartikel (50a) gebildet wird und die mit diesen verschachtelt sind, um ihre Bewegung zu der durchlässigen Ableitungsoberfläche zu verhindern.

5. Verfahren nach einem der Ansprüche 1 bis 4, wobei das Erhalten der Form das Positionieren der körnigen Filtrationsschicht (25a) in der Form eines Blocks umfasst, der die Filtrationspartikel (50a) umfasst, die durch ein flüchtiges Bindemittel (54a) miteinander verbunden sind.

6. Verfahren nach einem der Ansprüche 1 bis 4, wobei das Erhalten der Form ein Zerstäuben von Filtrationspartikeln (50a) auf der Drainageoberfläche (SD) der faserigen Textur und/oder auf der durchlässigen Ableitungsoberfläche (4) umfasst.

7. Verfahren nach Anspruch 4, oder nach einem der Ansprüche 5 oder 6 in Verbindung mit Anspruch 4, wobei das Erhalten der Form (a) das Bilden der körnigen Filtrationsschicht (5a), welche die Filtrationspartikel (50a) umfasst, und (b) das Zuführen von zusätzlichen Filtrationspartikeln (25b) in eine Trägerflüssigkeit, die durch Filtrationspartikel und die Drainageoberfläche drainiert wird, wobei die zusätzlichen Filtrationspartikel durch die Filtrationspartikel (50a) zurückgehalten werden, um das Rückhalteelement zu bilden.

8. Verfahren nach Anspruch 7 in Verbindung mit Anspruch 4, wobei die körnige Filtrationsschicht (5a) durch Zuführen von Filtrationspartikeln (50a) in eine zweite Trägerflüssigkeit auf der Seite der Drainageoberfläche (SD) gebildet wird, wobei die Filtrationspartikel eine Korngröße aufweist, die größer als eine Größe von Zwischenräumen des Porennetzwerks der faserigen Textur (6) ist, mit einem Drainieren der zweiten Trägerflüssigkeit durch die Drainageoberfläche, wobei die Filtrationspartikel durch die faserige Textur zurückgehalten werden, um die körnige Filtrationsschicht (5a) zu bilden.

9. Verfahren nach einem der Ansprüche 1 bis 8, wobei die Matrix durch Sintern von Matrixpartikeln (PM) gebildet wird und die Oberflächenschicht (104) durch Sintern von Filtrationspartikeln (50a) gebildet wird.

10. Verfahren nach einem der Ansprüche 1 bis 9, wobei die Matrixpartikel (PM) und die Filtrationspartikel (50a) aus ein und demselben Material gebildet werden.

11. Verfahren nach einem der Ansprüche 1 bis 10, wobei die Matrixpartikel (PM) und die Filtrationspartikel (50a) aus einem Keramikoxidmaterial, aus Siliziumkarbid oder aus Kohlenstoff sind.

12. Verfahren nach einem der Ansprüche 1 bis 11, wobei das Teil ein Strömungsmaschinenteil ist.

## Claims

1. A method for producing a part (100) made of composite material, comprising at least:
- obtaining a mold comprising (i) a fibrous texture (6), (ii) a granular filtration layer (5a; 15a; 25a) located between a drainage surface (SD) of the texture and a permeable discharge surface (4; 41) and comprising a powder of filtration particles (50a), and (iii) an element (5b) for retaining the granular layer, which element is distinct from said layer and located between the permeable discharge surface and the drainage surface,
- introducing a suspension (1) comprising matrix particles (PM) in a liquid medium (ML) through an introduction surface (SI) of the fibrous texture that is distinct from the drainage surface, the liquid medium passing through the drainage surface, the granular filtration layer and the retention element to be discharged through the permeable discharge surface, and the matrix particles being retained in the pores of the fibrous texture by the granular filtration layer, and
- forming the part made of composite material by forming a matrix in the pores of the fibrous texture from the matrix particles and forming a surface layer (104) of this part from the filtration particles.

2. The method according to claim 1, wherein the granular filtration layer (15a) further comprises reinforcing fibers (52a) distinct from the filtration particles (50a).

3. The method according to claim 1 or 2, wherein the retention element (5b) comprises at least one film or textile having a plurality of orifices for discharging the liquid medium (ML) and located between the granular filtration layer (5a; 15a; 25a) and the permeable discharge surface (4; 41).

4. The method according to any one of claims 1 to 3, wherein the retention element comprises at least one granular assembly formed by additional filtration particles (25b) having a different average size and/or a different shape of the filtration particles (50a) and interlocked therewith so as to prevent their movement towards the permeable discharge surface.

5. The method according to any one of claims 1 to 4, wherein obtaining the mold comprises positioning the granular filtration layer (25a) in the form of a block comprising the filtration particles (50a) bound together by a fugitive binder (54a).

6. The method according to any one of claims 1 to 4, wherein obtaining the mold comprises spraying the filtration particles (50a) onto the drainage surface (SD) of the fibrous texture and/or onto the permeable discharge surface (4).

7. The method according to claim 4 or according to one of claims 5 or 6 attached to claim 4, wherein obtaining the mold comprises (a) the formation of the granular filtration layer (5a) comprising the filtration particles (50a), and (b) the supply of additional filtration particles (25b) in a carrier liquid which is drained through the filtration particles and the drainage surface, the additional filtration particles being retained by the filtration particles (50a) so as to form the retention element.

8. The method according to claim 7 attached to claim 4, wherein the granular filtration layer (5a) is formed by adding filtration particles (50a) to a second vector liquid on the side of the drainage surface (SD), said filtration particles having a particle size greater than a size of the interstices of the pore network of the fibrous texture (6), with drainage of the second carrier liquid through the drainage surface, the filtration particles being retained by the fibrous texture so as to form the granular filtration layer (5a).

9. The method according to any one of claims 1 to 8, wherein the matrix is formed by sintering the matrix particles (PM), and the surface layer (104) is formed by sintering the filtration particles (50a).

10. The method according to any one of claims 1 to 9, wherein the matrix particles (PM) and the filtration particles (50a) are formed from the same material.

11. The method according to any one of claims 1 to 10, wherein the matrix particles (PM) and the filtration particles (50a) are made of oxide ceramic material, silicon carbide or carbon.

12. The method according to any one of claims 1 to 11, wherein the part is a turbomachine part.
